# EUROPEAN PATENT APPLICATION

(11) **EP 0 698 987 A2**
(43) Date of publication of application: **28.02.1996**
(21) Application number: 95113004.6
(22) Date of filing: 18.08.1995
(51) Int. Cl.: H04M 15/00

(54) **Telephony accounts method**

(30) Priority: 19.08.1994 ZA 9406300
(71) Applicant: ALCATEL N.V., NL-2288 BH Rijswijk (NL)
(72) Inventor: Shaw, Rowland Gordon, Rynfield Benoni 1501 (ZA)
(74) Representative: Pohl, Herbert, Dipl.-Ing.

(57) **Abstract**

This invention relates to a method of dealing with accounts for subscribers to a telephone system.

With the use of mobile telephone handsets such as in the cellular telephone system, subscribers may not be easy to reach, and the conventional rendering of accounts or invoices to a subscriber may not prove effective.

It is an object of this invention to provide a method of and apparatus for subscriber accounting in a telephony system which can at least alleviate some of the abovementioned difficulties.

The method of subscriber accounting in a telephony system, comprises storing and updating subscriber prepayments on a subscriber account at a centralised billing location, monitoring subscriber calls and levying charges therefor against the subscriber account, and transmitting information relating to the subscriber's account to the subscriber.

## Description

### INTRODUCTION

THIS INVENTION relates to a method of dealing with accounts for subscribers to a telephone system.

### BACKGROUND TO THE INVENTION

With the use of mobile telephone handsets such as in the cellular telephone system, subscribers may not be easy to reach, and the conventional rendering of accounts or invoices to a subscriber may not prove effective. Also, the conventional use and payment of periodic accounts requires payment of cash or cheque over a counter or in the post.

### OBJECT OF THE INVENTION

It is an object of this invention to provide a method of and apparatus for subscriber accounting in a telephony system which can at least alleviate some of the abovementioned difficulties.

### SUMMARY OF THE INVENTION

In accordance with this invention there is provided a method of subscriber accounting in a telephony system, comprising storing and updating subscriber prepayments on a subscriber account at a centralized billing location, monitoring subscriber calls and levying charges therefor against the subscriber account, and transmitting information relating to the subscriber's account to the subscriber.

The method may include displaying the said information on a display means associated with a subscriber's telephone instrument.

Preferably the accounting information includes the credit remaining in money or telephone usage units.

Pre-payment may be made by a subscriber against the subscriber's account by the transmission of payment information by the subscriber using his telephone instrument, such information causing an automatic transfer of funds from a subscriber's fund account to the subscriber's telephone account.

Subscriber outgoing calls are not permitted once a subscriber account has no prepaid credit recorded against it.

The telephone instrument may be connected to a display device, to display thereon said information.

The information may be displayed automatically in a predetermined sequence, or alternatively, specific information is transmitted to a subscriber on transmission of specific requests by the subscriber.

The invention extends to apparatus for subscriber accounting in a telephony system, comprising payment means for receiving and updating subscriber prepayments on a subscriber account, monitoring and accounting means for monitoring subscriber calls and levying charges therefor against the subscriber account, and transmission means for transmitting information relating to the subscriber's account to the subscriber.

Features of the invention provide for display means for displaying the said information in association with a subscriber's telephone instrument, and for the monitoring and accounting means to be arranged to derive accounting information including the credit remaining, and the current or last charge levied, or any one or more thereof.

The subscriber's telephone instrument is preferably arranged to enable payment to be made by a subscriber against the subscriber's account by the transmission of payment information by the subscriber using his telephone instrument, and interface means is provided, connectable to a subscriber's source of funds and operable to cause such information to automatically transfer funds from a subscriber's fund account to the subscriber's telephone account.

There is provided for the telephone instrument to be arranged to be connectable to a display device for displaying said information thereon.

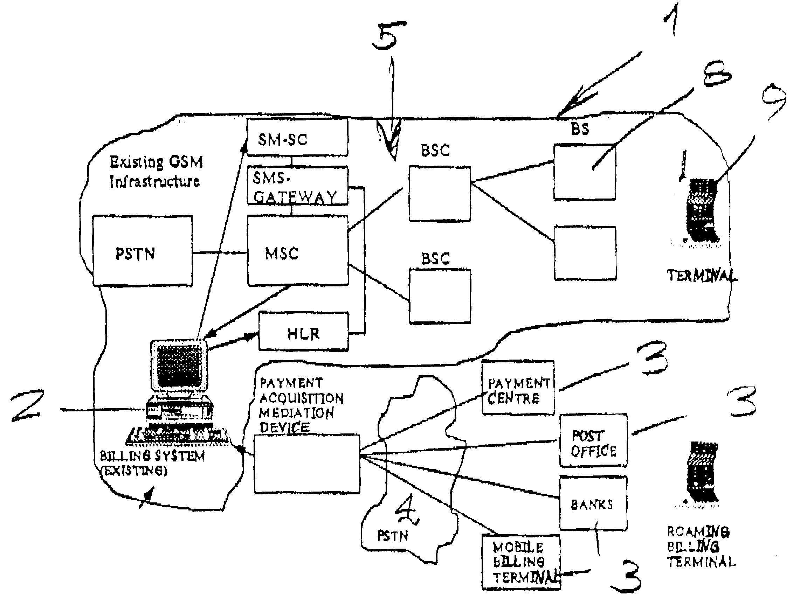

### BRIEF DESCRIPTION OF THE DRAWING

A preferred embodiment of the invention is described below by way of example only, and with reference to the accompanying drawing, which is a diagrammatic view of apparatus according to the invention.

### DETAILED DESCRIPTION OF THE DRAWING

As illustrated, a GSM telephone network (1) is connected to a computerised billing system (2) by which the network will enable or disable telephone subscriber facilities in accordance with the state of an account. The network is shown in conventional configuration and will be understood by those skilled in the art.

The account operates on a prepayment system only, and the network will only enable a subscriber's line on the basis that there is credit available in his account, and will disable the line as soon as the credit is used up. Such a credit would be automatically decremented as each ratable unit is used, in much the same fashion as the "pay-phone" at a telephone call box for public use.

The payments or prepayments would be made through any convenient utility point (3) such as a post office, bank, dedicated payment centre, mobile billing terminal, or other sales point. Such payments are then entered automatically into a point of sale terminal network (PSTN) (4), through a payment acquisition mediation device (5) into the the billing system (2). From the telephone network the communications path passes through normal units (7) and finally to base stations (8), which communicate through air interface with cellular telephone handsets (9).

In use, a subscriber prepays an amount at a utility position (3) which is sent to the billing system (2) and the account is enabled to the extent of the credit of the prepayment. If the subscriber using handset (8) now dials out or dials into his own account, the credit is reflected on the readout on the handset on the cellular short message service (SMS). The subscriber is thus aware of how much money, or units of telephone calls, or both, are to his credit in his account. As the subscriber dials out and makes a call, his account balance will be decremented and may be observed on the handset readout.

Preferably the subscriber causes the automatic transfer of funds from his bank account to the telephone account directly to the billing system (2). To do this he telephones in to his bank account, and transfer the funds directly by means of keyed tone instructions, thus prepaying his account in the billing system (2) electronically, from a remote position.

A variety of accounting information can be made available to the subscriber, such as cost of last call, average cost and so on. Such information may be available on specific query or interrogation by the subscriber, or may be transmitted to and be retrievable by, the subscriber in a predetermined sequence. It will be appreciated that the payment may be recorded in money, time units or other units of telephone usage.

It is considered that the invention provides a useful and simple method and apparatus for the payment and control Of subscriber accounts in a telephone system.

## Claims

1. A method of subscriber accounting in a telephony system, comprising storing and updating subscriber prepayments on a subscriber account at a centralised billing location, monitoring subscriber calls and levying charges therefor against the subscriber account, and transmitting information relating to the subscriber's account to the subscriber.

2. A method as claimed in claim 1 including displaying the said information on a display means associated with a subscriber's telephone instrument.

3. A method as claimed in claim 2 in which the accounting information includes the credit remaining in money or telephone usage units.

4. A method as claimed in any one of claims 1 to 3 in which pre-payment is made by a subscriber against the subscriber's account by the transmission of payment information by the subscriber using his telephone instrument, and in which such information causes an automatic transfer of funds from a subscriber's fund account to the subscriber's telephone account.

5. A method as claimed in claim 4 in which subscriber outgoing calls are not permitted once a subscriber account has no prepaid credit recorded against it.

6. A method as claimed in any one of claims 1 to 5 including and connecting the telephone instrument to a display device, and displaying thereon said information.

7. A method as claimed in claim 6 in which the information is displayed automatically in a predetermined sequence, or alternatively, specific information is transmitted to a subscriber on transmission of specific requests by the subscriber.

8. Apparatus for subscriber accounting in a telephony system, comprising payment means for receiving and updating subscriber prepayments on a subscriber account, monitoring and accounting means for monitoring subscriber calls and levying charges therefor against the subscriber account, and transmission means for transmitting information relating to the subscriber's account to the subscriber.

9. Apparatus as claimed in claim 8 including display means for displaying the said information in association with a subscriber's telephone instrument.

10. Apparatus as claimed in claim 9 in which the monitoring and accounting means is arranged to derive accounting information including the credit remaining, and the current or last charge levied, or any one or more thereof.

11. Apparatus as claimed in any one of claims 8 to 10 in which the subscriber's telephone instrument is arranged to enable payment to be made by a subscriber against the subscriber's account by the transmission of payment information by the subscriber using his telephone instrument, and interface means is provided, connectable to a subscriber's source of funds and operable to cause such information to automatically transfer funds from a subscriber's fund account to the subscriber's telephone account.

12. A method as claimed in any one of claims 8 to 11 in which the telephone instrument is arranged to be connectable to a display device for displaying said information thereon.
